(19) **Europäisches Patentamt / European Patent Office / Office européen des brevets**

(11) **EP 4 668 737 A1**

(12) **EUROPEAN PATENT APPLICATION**

(43) Date of publication:
**24.12.2025 Bulletin 2025/52**

(21) Application number: **24305973.0**

(22) Date of filing: **20.06.2024**

(51) International Patent Classification (IPC):
**H04N 19/11** (2014.01) **H04N 19/157** (2014.01)
**H04N 19/17** (2014.01) **H04N 19/593** (2014.01)
**H04N 19/70** (2014.01)

(52) Cooperative Patent Classification (CPC):
**H04N 19/17; H04N 19/11; H04N 19/157;**
**H04N 19/593; H04N 19/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **FRANCOIS, Edouard**
**35890 BOURG DES COMPTES (FR)**
• **REUZE, Kevin**
**35700 RENNES (FR)**
• **RADOSAVLJEVIC, Milos**
**35000 RENNES (FR)**
• **LE PENDU, Mikael**
**35700 RENNES (FR)**

(74) Representative: **Interdigital**
**Immeuble ZEN 2**
**845 A, avenue des Champs Blancs**
**35510 Cesson-Sévigné (FR)**

(54) **MERGE SKIP SPECIALIZATION FOR INTRA MODES**

(57) A method and an apparatus for encoding or decoding an image or a video are provided wherein it is determined, for a block of a video, whether or not an intra merge skip mode is used for the block, the intra merge skip mode indicating that residual prediction of the block is inferred to be null and an intra mode for predicting the block is selected in a list of intra mode candidates. The list of intra mode candidates is obtained based on a set of intra modes for which the intra merge skip mode is enabled, the set of intra modes comprising at least one intra mode distinct from an Intra Block Copy mode. If the intra merge skip mode is used for the block, the block is encoded or reconstructed using a selected intra mode candidate in the list of intra mode candidates.

900

901 → Determining use of intra merge skip mode for the block

902 → Obtaining list of intra mode candidates

903 → Decoding/Reconstructing the block

FIG. 9

EP 4 668 737 A1

**Description**

TECHNICAL FIELD

The present embodiments generally relate to video compression. The present embodiments relate to a method and an apparatus for encoding or decoding an image or a video. More particularly, the present embodiments relate to improving intra prediction in video compression system.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. In inter prediction, motion vectors used in motion compensation are often predicted from motion vector predictor. To reconstruct the video, the compressed data are decoded by inverse processes corresponding to the entropy coding, quantization, transform, and prediction.

SUMMARY

According to an aspect, a method for encoding an image or a video is provided. The method comprises: determining, for a block of a video, whether or not an intra merge skip mode is used for the block, the intra merge skip mode indicating that residual prediction of the block is inferred to be null and an intra mode for predicting the block is selected in a list of intra mode candidates,
obtaining the list of intra mode candidates based on a set of intra modes for which the intra merge skip mode is enabled, the set of intra modes comprising at least one intra mode distinct from an Intra Block Copy mode, and if the intra merge skip mode is used for the block, encoding the block using a selected intra mode candidate in the list of intra mode candidates. According to another aspect, an apparatus for encoding an image or a video is provided. The apparatus comprises one or more processors operable to: determine, for a block of a video, whether or not an intra merge skip mode is used for the block, the intra merge skip mode indicating that residual prediction of the block is inferred to be null and an intra mode for predicting the block is selected in a list of intra mode candidates, obtain the list of intra mode candidates based on a set of intra modes for which the intra merge skip mode is enabled, the set of intra modes comprising at least one intra mode distinct from an Intra Block Copy mode, and if the intra merge skip mode is used for the block, encode the block using a selected intra mode candidate in the list of intra mode candidates.

According to an aspect, a method for decoding an image or a video is provided. The method comprises determining, for a block of a video, whether or not an intra merge skip mode is used for the block, the intra merge skip mode indicating that residual prediction of the block is inferred to be null and an intra mode for predicting the block is selected in a list of intra mode candidates,
obtaining the list of intra mode candidates based on a set of intra modes for which the intra merge skip mode is enabled, the set of intra modes comprising at least one intra mode distinct from an Intra Block Copy mode, and if the intra merge skip mode is used for the block, reconstructing the block using a selected intra mode candidate in the list of intra mode candidates.

According to another aspect, an apparatus for decoding an image or a video is provided. The apparatus comprises one or more processors operable to determine, for a block of a video, whether or not an intra merge skip mode is used for the block, the intra merge skip mode indicating that residual prediction of the block is inferred to be null and an intra mode for predicting the block is selected in a list of intra mode candidates, obtain the list of intra mode candidates based on a set of intra modes for which the intra merge skip mode is enabled, the set of intra modes comprising at least one intra mode distinct from an Intra Block Copy mode, and if the intra merge skip mode is used for the block, reconstruct the block using a selected intra mode candidate in the list of intra mode candidates.

According to another aspect, a method for encoding or decoding an image or a video is provided wherein a list of skip candidates is built based on template prediction of a block and wherein the list of skip candidates is used for predicting the block in the inter merge skip mode. According to another aspect, an apparatus for encoding or decoding an image or a video is provided wherein the apparatus comprises one or more processors operable to build a list of skip candidates based on template prediction of a block and using the list of skip candidates for predicting the block in the inter merge skip mode.

Further embodiments that can be used alone or in combination are described herein.

One or more embodiments also provide a computer program comprising instructions which when executed by one or more processors cause the one or more processors to perform any one of the methods for encoding or decoding an image or a video according to any of the embodiments described herein. One or more of the present embodiments also provide a non-transitory computer readable medium and/or a computer readable storage medium having stored thereon instructions for encoding or decoding an image or a video according to the methods described herein.

One or more embodiments also provide a computer readable storage medium having stored thereon a bitstream generated according to the methods described herein. One or more embodiments also provide a method and apparatus for transmitting or receiving the bitstream generated according to the methods described above.

According to an aspect, a device is provided that comprises an apparatus for decoding an image or video according to any one of the embodiments described above; and at least one of (I) an antenna configured to receive or transmit a signal, the signal including data representative of the image or video, (ii) a band limiter configured to limit the signal to a band of frequencies that includes the data representative of the image or video, or (iii) a display configured to display the image or video.

In a variant, the device comprises at least one of a television, a cell phone, a tablet, a set-top box.

BRIEF DESCRIPTION OF THE DRAWINGS

FIG. 1A illustrates a block diagram of a system within which aspects of the present embodiments may be implemented according to an embodiment.

FIG. 1B illustrates a block diagram of a system within which aspects of the present embodiments may be implemented according to another embodiment.

FIG. 1C illustrates a block diagram of a system within which aspects of the present embodiments may be implemented according to another embodiment.

FIG. 2 illustrates a block diagram of an embodiment of a video encoder within which aspects of the present embodiments may be implemented.

FIG. 3 illustrates a block diagram of an embodiment of a video decoder within which aspects of the present embodiments may be implemented.

FIG. 4A illustrates an example of a method for decoding a block of an image or a video according to an embodiment.

FIG. 4B illustrates an example of a method for decoding a block of an image or a video according to another embodiment.

FIG. 5 illustrates an example of template prediction according to an embodiment.

FIG. 6A illustrates an example of a method for encoding or decoding a block of an image or a video according to an embodiment.

FIG. 6B illustrates an example of a method for encoding or decoding a block of an image or a video according to another embodiment.

FIG. 7 illustrates an example of a method for decoding a block of an image or a video according to a further embodiment.

FIG. 8 illustrates an example of a method for encoding a block of an image or a video according to an embodiment.

FIG. 9 illustrates an example of a method for decoding a block of an image or a video according to an embodiment.

FIG. 10 shows two remote devices communicating over a communication network in accordance with an example of the present principles.

FIG. 11 shows the syntax of a signal in accordance with an example of the present principles.

## DETAILED DESCRIPTION

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

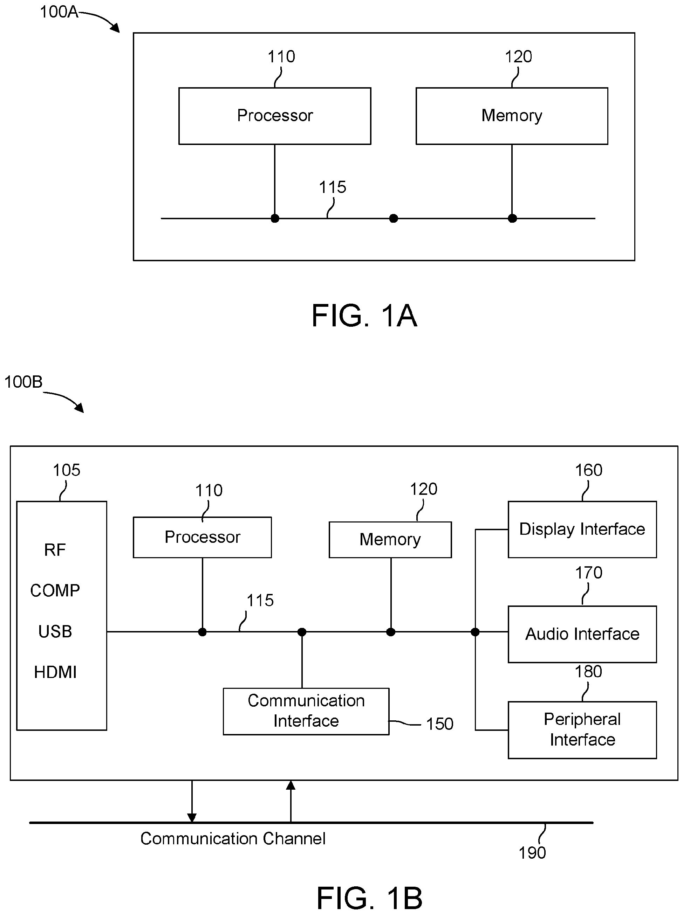

The aspects described and contemplated in this application can be implemented in many different forms. FIGs. 1A, 1B, 1C, 2 and 3 below provide some embodiments, but other embodiments are contemplated and the discussion of FIGs. 1A, 1B, 1C, 2 and 3 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

The present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

FIG. 1A-1C illustrates block diagrams of examples of systems in which various aspects and embodiments can be implemented. Any one of the systems 100A, 100B or 100B may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. In various embodiments, the system 100A, 100B or 100C is communicatively coupled to other systems, or to other electronic devices, via, for example, a communications bus or through dedicated input and/or output ports. In various embodiments, the system 100A, 100B or 100C is configured to implement one or more of the aspects described in this application.

FIG. 1A illustrates a block diagram of an example of a system in which various aspects and embodiments can be implemented. The system 100A includes at least one processor 110 configured to execute instructions loaded therein for implementing, for example, the various aspects described in this application. Processor 110 may include embedded memory, input output interface, and various other circuitries as known in the art. The system 100A includes at least one memory 120, e.g., a volatile memory device, and/or a non-volatile memory device, including, but not limited to, EEPROM, ROM, PROM, RAM, DRAM, SRAM, flash, magnetic disk drive, and/or optical disk drive. The memory 120 may include an internal storage device, an attached storage device, and/or a network accessible storage device, as non-limiting examples. The processor 110 may be interconnected to the memory 120 by an interconnection bus 115.

Program code to be loaded onto processor 110 to perform the various aspects described in this application is subsequently loaded onto memory 120 for execution by processor 110.

In some embodiments, memory inside of the processor 110 is used to store program code instructions and to provide working memory for processing that is needed during encoding or decoding. The input to the elements of system 100A may be provided through various input devices (not represented). Both Processor 110 and memory 120 can also have one or more additional interconnections to external connections.

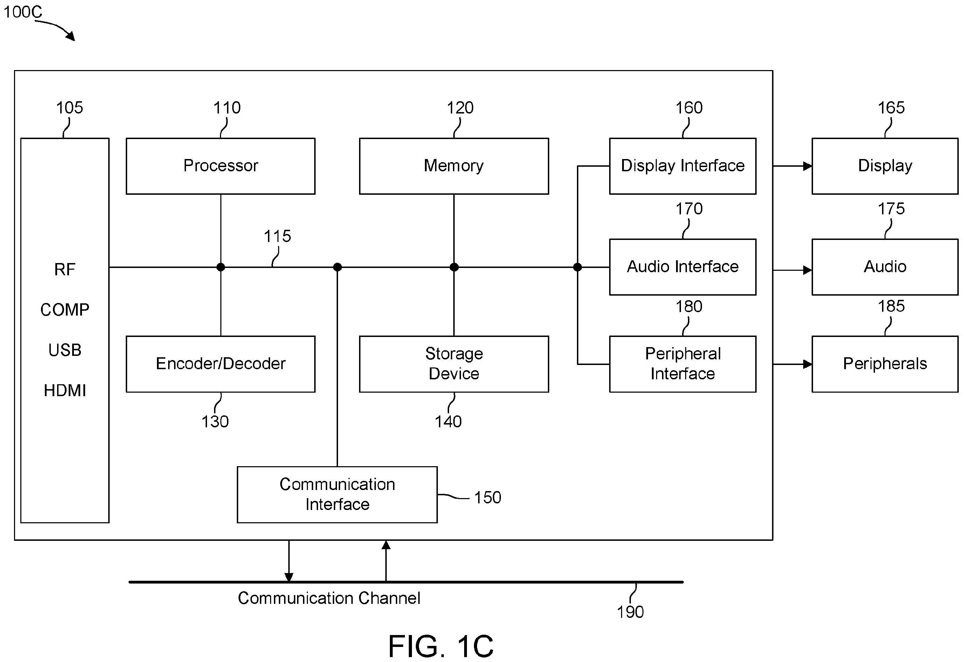

FIG. 1B illustrates a block diagram of an example of a system 100B in which various aspects and embodiments can be implemented. The system 100B includes the processor 110 and memory 120 as described in relation with FIG. 1A. The input to the elements of system 100B may be provided through various input devices as indicated in block 105 which is described further below with FIG. 1C. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia

Interface (HDMI) input terminal. Other examples, not shown in FIG. 1B, include composite video.

The various elements may be interconnected and transmit data therebetween using suitable connection arrangement 115, for example, an internal bus as known in the art, including the I2C bus, wiring, and printed circuit boards.

The system 100B includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

The system 100B may provide an output signal to various output devices, including a display, speakers, and other peripheral devices. The output devices may be communicatively coupled to system 100B via dedicated connections through respective interfaces 160, 170, and 180. Alternatively, the output devices may be connected to system 100B using the communications channel 190 via the communications interface 150.

FIG. 1C illustrates a block diagram of an example of a system 100C in which various aspects and embodiments can be implemented according to another embodiment. Elements of system 100C, singly or in combination, may be embodied in a single integrated circuit, multiple Ics, and/or discrete components. For example, in at least one embodiment, the processing and encoder/decoder elements of system 100C are distributed across multiple Ics and/or discrete components.

The system 100C includes the processor 110 and memory 120 as described in relation with FIG. 1A or 1B.

System 100C includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100C includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100C or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input data (image, video, volumetric content), the decoded data (image, video, volumetric content) or portions of the decoded data, the bitstream, matrices, variables, and intermediate or final results from the processing of equations, formulas, operations, and operational logic.

In some embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for data encoding and decoding operations, such as for MPEG-2, HEVC (HEVC refers to High Efficiency Video Coding, also known as H.265 and MPEG-H Part 2), or VVC (Versatile Video Coding also known as H.266, standard developed by JVET, the Joint Video Experts Team).

The input to the elements of system 100C may be provided through various input devices as indicated in block 105, also mentioned in FIG. 1B. Such input devices of system 100B or 100C include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B or 1C, include composite video.

In various embodiments, the input devices of block 105 in system 100B or 100C have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which can be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100B or 100C to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the data stream as necessary for presentation on an output device.

Various elements of the systems 100A, 100B or 100C may be provided within an integrated housing, Within the integrated housing, the various elements may be interconnected and transmit data therebetween using the suitable connection arrangement 115, for example, an internal bus as known in the art, including the I2C bus, wiring, and printed circuit boards.

Similarly, as for the system 100B of FIG. 1B, the system 100C includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100B or 100C, in various embodiments, using a Wi-Fi network such as IEEE 802.11 (IEEE refers to the Institute of Electrical and Electronics Engineers). The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100B or 100C using a set-top box that delivers the data over the HDMI connection of the input block 105. Still other embodiments provide streamed data to the system 100B or 100C using the RF connection of the input block 105. As indicated above, various embodiments provide data in a non-streaming manner. Additionally, various embodiments use wireless networks other than Wi-Fi, for example a cellular network or a Bluetooth network.

The system 100C may provide an output signal to various output devices, including a display 165, speakers 175, and other peripheral devices 185. The display 165 of various embodiments includes one or more of, for example, a touchscreen display, an organic light-emitting diode (OLED) display, a curved display, and/or a foldable display. The display 165 can be for a television, a tablet, a laptop, a cell phone (mobile phone), or other devices. The display 165 can also be integrated with other components (for example, as in a smart phone), or separate (for example, an external monitor for a laptop). The other peripheral devices 185 include, in various examples of embodiments, one or more of a stand-alone digital video disc (or digital versatile disc) (DVR, for both terms), a disk player, a stereo system, and/or a lighting system. Various embodiments use one or more peripheral devices 185 that provide a function based on the output of the system 100C. For example, a disk player performs the function of playing the output of the system 100C.

In various embodiments, control signals are communicated between the system 100C and the display 165, speakers 175, or other peripheral devices 185 using signaling such as AV.Link, CEC, or other communications protocols that enable device-to-device control with or without user intervention. The output devices may be communicatively coupled to system 100C via dedicated connections through respective interfaces 160, 170, and 180. Alternatively, the output devices may be connected to system 100C using the communications channel 190 via the communications interface 150. The display 165 and speakers 175 may be integrated in a single unit with the other components of system 100C in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

In any of the systems 100A, 100B or 100C, the embodiments can be carried out by computer program product comprising code instructions that implements any one of embodiments described herein. The computer program product may be computer software implemented by the processor 110 or by hardware, or by a combination of hardware and software. As a non-limiting example, the embodiments can be implemented by one or more integrated circuits. The memory 120 of any one of the systems 100A, 100B or 100C can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 of any one of the systems 100A, 100B or 100C can be of any type appropriate to the technical environment, and can encompass one or more of microprocessors, general purpose computers, special purpose computers, and processors based on a multi-core architecture, as non-limiting examples.

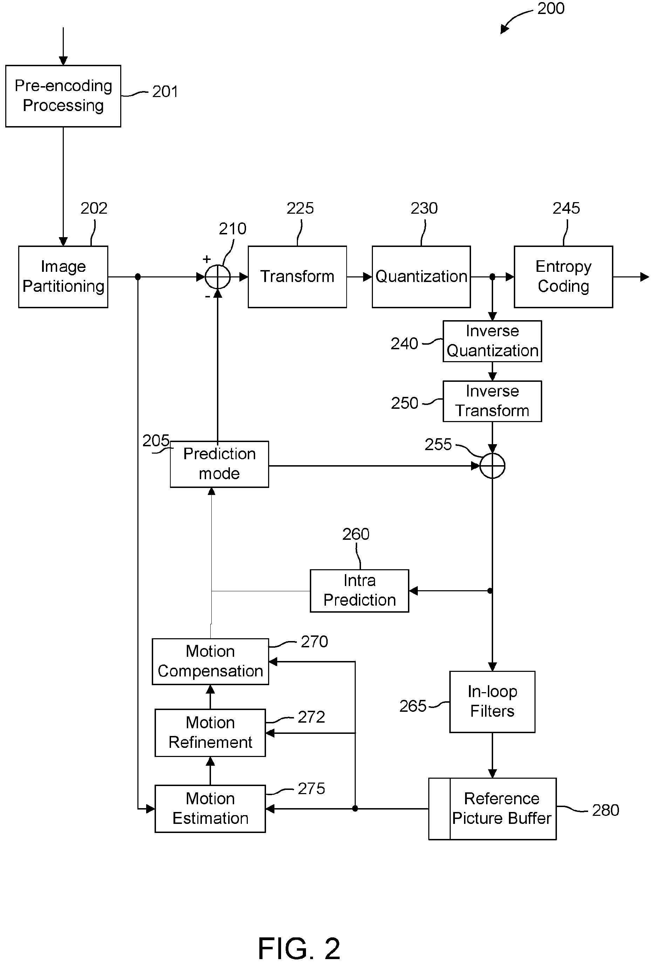

FIG. 2 illustrates an example of a block-based hybrid video encoder 200. Variations of this encoder 200 are contemplated, but the encoder 200 is described below for purposes of clarity without describing all expected variations.

In some embodiments, FIG. 2 also illustrate an encoder in which improvements are made to the HEVC standard or a VVC standard (Versatile Video Coding, Standard ITU-T H.266, ISO/IEC 23090-3, 2020) or an encoder employing technologies similar to HEVC or VVC, such as an encoder ECM (Enhanced Compression Model) under development by JVET (Joint Video Exploration Team).

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of color components), or re-sizing the picture (ex: down-scaling). Metadata can be associated with the pre-processing and attached to the bitstream.

In the encoder 200, a picture is encoded by the encoder elements as described below. The picture to be encoded is partitioned (202) and processed in units of, for example, CUs (Coding units) or blocks. In the disclosure, different expressions may be used to refer to such a unit or block resulting from a partitioning of the picture. Such wording may be coding unit or CU, coding block or CB, luminance CB, or block. A CTU (Coding Tree Unit) refers to a group of blocks or group of units or group of coding units (CUs). In some embodiments, a CTU may be considered as a block, or a unit as itself.

Each unit is encoded using, for example, either an intra or inter mode. When a unit is encoded in an intra mode, it performs intra prediction (260). In an inter mode, motion estimation (275) and compensation (270) are performed. The intra mode and/or the inter mode may comprise several distinct sub-modes. For example, the intra mode may comprise directional intra predictions, template-based intra mode derivation prediction, intra block copy prediction or other modes spatially predicting the samples values of the unit. The inter mode may comprise skip mode, merge mode according to which motion information is derived from a list of motion candidates and no motion vector prediction residual is encoded, an inter mode according to which motion information is derived from a list of motion candidates and further refined either by encoding motion vector prediction residual or by template-matching performed both at the encoder and the decoder, further inter modes are also possible. The encoder decides (205) which one of the intra mode or inter mode to use for encoding the unit. When different intra modes and/or inter modes are possible, the encoder decides (205) which of the intra modes or inter modes to use. The encoder indicates the intra/inter decision by, for example, one or more syntax element signaling the prediction mode. The encoder may also blend (205) intra prediction result and inter prediction result, or blend results from different intra/inter prediction methods. Prediction residuals are calculated, for example, by subtracting (210) the predicted block from the original image block.

The motion refinement module (272) uses already available reference picture in order to refine the motion field of a block without reference to the original block. A motion field for a region can be considered as a collection of motion vectors for all pixels with the region. If the motion vectors are sub-block-based, the motion field can also be represented as the collection of all sub-block motion vectors in the region (all pixels within a sub-block have the same motion vector, and the motion vectors may vary from sub-block to sub-block). If a single motion vector is used for the region, the motion field for the region can also be represented by the single motion vector (same motion vectors for all pixels in the region).

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes (reconstructs) an encoded block to provide a reference for further predictions. The quantized transform coefficients are de-quantized (240), and inverse transformed (250) to decode prediction residuals. Combining (255) the decoded prediction residuals and the predicted block, an image block is reconstructed. In-loop filters (265) are applied to the reconstructed picture to perform, for example, one or more of a deblocking filtering, an SAO (Sample Adaptive Offset) filtering or an ALF (Adaptive Loop Filter) filtering to reduce encoding artifacts. The filtered image is stored at a reference picture buffer (280). Such filtered image is also referred to as a reference image in the following.

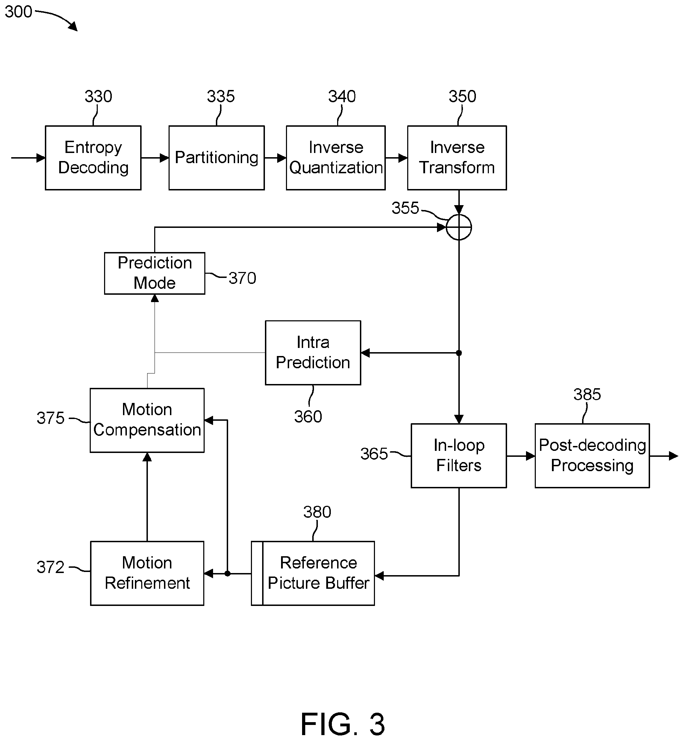

FIG. 3 illustrates a block diagram of a video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340), and inverse transformed (350) to decode the prediction residuals. Combining (355) the decoded prediction residuals and the predicted block, an image block is reconstructed.

The predicted block can be obtained (370) from intra prediction (360) or motion-compensated prediction (i.e., inter prediction) (375). In a similar manner as in the encoder, intra prediction and/or inter prediction may comprise several distinct sub-modes. The decoder obtains (370) the predictor block based on one or more syntax elements signaling the prediction mode among the available intra modes and inter modes. The decoder may blend (370) the intra prediction result and inter prediction result, or blend results from multiple intra/inter prediction methods. Before motion compensation, the motion field may be refined (372) by using already available reference pictures. In-loop filters (365) are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201), or re-sizing the reconstructed pictures (ex: up-scaling). The post-decoding processing can use metadata derived in the pre-encoding processing and signaled in the bitstream.

Some of the embodiments described herein relates to improving intra prediction in image and video coding.

Any one of the embodiments described herein can be implemented for instance in an intra prediction module of a video encoder, such as 260 in FIG. 2 and an intra prediction module of a video decoder, such as 360 in FIG. 3.

There are several powerful intra prediction modes considered in the exploratory model being studied and developed by JVET. This model is named Enhanced Coding Model (ECM) and a description can be found in *"Algorithm description of Enhanced Compression Model 12 (ECM 12)"*, Document JVET-AG2025, 33rdMeeting, Teleconference, 17-26 January 2024. For some of those intra modes, a merge mode is supported. A short description of these modes is provided in following.

Intra block copy (IBC)

Intra block copy (IBC) is an intra prediction mode that uses a coded displacement vector (named block vector - BV) to identify a block in an already reconstructed region of the current picture used for predicting the current block. IBC can use multiple BVs, and can also employ a merge mode based on candidate BVs list construction. When IBC merge mode is selected, an index in this list is coded and indicates the BV to use among the candidate BVs. Alternatively, several lists may be derived, and an indicator of the list to use may be signaled, then an index indicative of the candidate may be signaled.

Intra template matching (ITMP)

Intra template matching prediction (ITMP) is an intra prediction mode that copies a "best" prediction block from the reconstructed part of the current frame, whose already reconstructed neighboring samples (in a neighborhood named L-shaped template) match the current reconstructed neighboring samples template. For a predefined search range, the encoder searches for the most similar template to the current template in a reconstructed part of the current frame and uses the corresponding block as a prediction block. The encoder then signals the usage of this mode, and the same prediction operation is performed at the decoder side. When this mode applies, the decoder has to perform the same search as performed by the encoder to identify the prediction block.

The prediction signal may be generated by matching different types of neighborhood shapes, such as the L-shaped, Top-only or Left-Only causal neighbor of the current block with another block in a predefined search area. The matching criterion is generally based on a distortion metric (or cost function) between the samples of each template, such as Sum of Absolute Difference (SAD), Mean remove Sum of Absolute Difference (MRSAD), Sum of square errors (SSE), Sum of Absolute Transform Difference (SATD).

In the ECM12.0, ITMP employs an implicit merge mode, where merge candidates are considered without signaling a merge flag or index. Specifically, the reference positions pointed by the block vectors of all the adjacent and non-adjacent merge candidates (coded in ITMP or IBC mode) are used as additional candidates beyond the default search areas. The same template matching cost is used to compare the merge positions and the defaults ones. For bi-directional IBC merge candidate, two candidates are retained. Similarly, for ITMP, two candidates are considered corresponding to the best candidate by template search and the coded candidate selected among a sorted list of 19 candidates.

Matrix-based intra prediction (MIP)

The matrix-based intra prediction (MIP) mode is part of the VVC standard. In MIP, the prediction signal is generated from the neighboring samples (template samples) of the current block using a matrix multiplication. The input template samples of the prediction are first downsampled. Then, a matrix-vector multiplication is applied to this downsampled input. Finally, the result is upsampled. The parameters of the involved matrices are trained with an algorithm similar to the training of neural network-based predictors. It is therefore a very efficient coding mode with ability to perform more accurate predictions than conventional intra directional modes, or DC and planar modes.

A variant of the MIP mode of VVC has been recently adopted in the ECM. Instead of replacing the existing MIP modes from VVC, new MIP modes are introduced. Those new MIP modes replace some regular intra prediction modes. Regular intra prediction modes correspond to conventional directional intra prediction modes. New MIP modes use a large template area and larger matrices to predict the current block than the previous MIP mode of VVC. These new MIP modes are also particularly efficient and considered as more accurate than the regular intra prediction modes that they replace.

Cross-Component Prediction (CCP)

Chroma can be predicted very accurately by using Cross-Component Prediction (CCP), used to predict chroma samples from collocated luma samples. In VVC, cross-component linear model (CCLM) was defined where each chroma sample is linearly derived from its collocated luma sample, the parameters of the linear model being derived from neighboring reconstructed luma and chroma samples of the current block.

In ECM12.0, convolutional cross-component model (CCCM) is defined in a similar spirit as done by the current CCLM modes, using large template area and more complex model (a convolutional filter) than a linear model.

Block-vector guided CCCM (BVG-CCCM) is also defined in ECM12.0. When the co-located luma prediction is coded with IBC or ITMP in Intra slices, the BVG-CCCM mode can be used. In this mode, the BVs of the co-located luma blocks, coded in IBC or ITMP modes, are used to determine the reference area for calculating the CCCM parameters. Other variants of CCCM also exist in ECM12.0.

Also, a Cross-Component Prediction (CCP) merge (a.k.a., non-local CCP) mode is also defined. For chroma coding, a flag is signaled to indicate whether CCP mode (including the CCLM, CCCM and their variants) or non-CCP mode (conventional chroma intra prediction mode, fusion of chroma intra prediction mode) is used. If the CCP mode is selected, one more flag is signaled to indicate how to derive the CCP type and parameters, i.e., either from a CCP merge list or signaled/derived on-the-fly. A CCP merge candidate list is constructed from the spatial adjacent, temporal, spatial non-adjacent, history-based or shifted temporal candidates. After including these candidates, default models are further included to fill the remaining empty positions in the merge list. In order to remove redundant CCP models in the list, pruning operation is applied. A flag is signaled to indicate whether the CCP merge mode is applied or not. If CCP merge mode is applied, an index is signaled to indicate which candidate model is used by the current block.

Direct block vector (DBV) for chroma block

For chroma, there also exist in ECM the Direct block vector (DBV) mode. A flag is signaled to indicate whether a chroma block is coded using IBC mode. If one of the co-located luma blocks in five locations (top left corner, top right corner, center, bottom left corner, bottom right corner of the chroma block) is coded with IBC or ITMP mode, its block vector is scaled and is used as block vector for the chroma block. Note that the usage of several co-located luma blocks is justified by the fact that separate trees may be used for luma and chroma blocks.

Intra merge mode

In JVET-AH0211 (Y.-J. Chang, V. Seregin, M. Karczewicz, Non-EE2: Intra merge mode, Document JVET-AH0211, April 2024), a new intra merge mode is proposed. One or more lists of intra mode candidates is constructed using the intra modes from the neighbor blocks. A flag is signaled to indicate whether to enable the proposed intra merge mode. If the flag is true, a list index is signaled to indicate which intra merge list is selected if there are more than one intra merge list. An index is further signaled to indicate which candidate is used for this CU in the selected intra merge list. When intra merge mode applies, the CU inherits the intra parameters (such as BV if the selected merge mode candidate is IBC, angular direction if the selected merge mode candidate is an intra directional mode ...). If the selected merge candidate is ITMP, the current CU performs its own ITMP search and does not inherit from the motion displacement from the selected merge ITMP candidate.

Skip mode with Inter blocks and with IBC

A merge skip mode is specified in VVC for inter predicted Coding Units or Prediction Units (PUs). Merge mode for inter-predicted PU allows an inter-predicted PU to inherit the same motion vector(s), prediction direction, and reference picture index(indices) from one of several candidate spatial neighboring PUs and temporal co-located PUs. Skip mode is a CU-level merge mode without any non-zero quantized transform coefficients for the CU. In skip mode, the MV is predicted from the merge list using an index, and the prediction residual is not transmitted (the reconstructed block is the same as predicted).

In 2022 edition of VVC (ITU-T H.266, SERIES H: AUDIOVISUAL AND MULTIMEDIA SYSTEMS Infrastructure of audiovisual services - Coding of moving video, Versatile video coding, 2022*), the skip mode is enabled for IBC, as illustrated in syntax table excerpt below. Among other conditions, when flag *sps_ibc_enabled_flag* is equal to 1, the flag *cu_skip_flag* may be signaled at CU level. Note that this is only supported when separate luma/chroma trees are not used (*treeType != DUAL_TREE_CHROMA*).

| coding_unit( x0, y0, cbWidth, cbHeight, cqtDepth, treeType, modeType) { | **Descriptor** |
|---|---|
| ... | |
|   if( sh_slice_type != I ‖ sps_ibc_enabled_flag) { | |
|     if( treeType != DUAL_TREE_CHROMA && <br>       ( ( !( cbWidth = = 4 && cbHeight = = 4 ) && <br>       modeType != MODE_TYPE_INTRA) ‖ <br>       (sps_ibc_enabled_flag && cbWidth <= 64 && cbHeight <= <br> 64))) | |
|       **cu_skip_flag**[ x0 ][ y0 ] | ae(v) |
| ... | |

The semantic of cu_skip_flag is defined in VVC as follows:

**cu_skip_flag**[ x0 ][ y0 ] equal to 1 specifies that for the current coding unit, when decoding a P or B slice, no more syntax elements except one or more of the following are parsed after cu_skip_flag[ x0 ][ y0 ]: the IBC mode flag pred_mode_ibc_flag[ x0 ][ y0], and the merge_data() syntax structure; when decoding an I slice, no more syntax elements except merge_idx[ x0 ][ y0 ] are parsed after cu_skip_flag[ x0 ][ y0 ]. cu_skip_flag[ x0 ][ y0 ] equal to 0 specifies that the coding unit is not skipped. The array indices x0, y0 specify the location ( x0, y0 ) of the top-left luma sample of the considered coding block relative to the top-left luma sample of the picture.

The intra merge mode described above used for some intra modes aims at avoiding coding some syntax elements such as a BV for IBC merge candidate. This is typically used for IBC and ITMP. However, the prediction residual signal is still coded. For each component, and for each transform block of the CU, a syntax element named cbf (coded block flag) is coded to indicate whether the residue of the transform block is null or not, and when it is not null, other syntax elements and the quantized transform coefficients of the block are coded. When a coding block is split in multiple transform blocks, as many cbfs as the number of transform blocks have to be coded.

Considering that some intra modes are particularly efficient, which increases the probability to have null residue, increased compression gain can be achieved by improving the current design of intra prediction.

Embodiments provided herein introduce a new intra merge skip mode for intra coded blocks, CUs or PUs. Inter merge skip mode is a mode for example used in HEVC allowing to strongly limit the syntax cost for an inter CU, based on the fact that the residual signal is considered as 0 for all the color components.

Embodiments provided herein introduce a new intra mode skip mode for intra coded blocks that applies for some specific intra modes. These specific intra modes are for example the ones that are expected to provide very accurate spatial prediction. These intra modes may be for example Intra Template Matching (ITMP), Matrix based intra prediction (MIP). In this document, intra modes correspond to all modes enabled in intra pictures and slices. The list of specific intra modes may be predefined or may be signaled in a high-level syntax structure such as SPS, PPS, slice header.

In the embodiments described herein, when intra merge skip mode is selected, an index may be coded when several candidate parameter values (such as several candidate intra mode values, several candidate parameter BVs) are available, and the residual is considered as null. In other words, the reconstructed block is the same as predicted. Signaling of other syntax elements such as the partitioning of the block in sub-TUs, cbf for luma and chroma TUs, information related to the transform (horizontal and vertical transform types, usage of low-frequency non-separable transform, ...) may also be skipped.

The intra merge skip mode can be used in one or more of the following embodiments and variants, which are further described below.

An embodiment provides for use of an intra merge skip mode enabled for specific intra modes, the intra merge skip mode consisting in applying the merge mode without coding any residual. In a variant, the intra merge skip can be signaled before signaling the specific intra modes, which implicitly eliminates the non-specific intra modes as possible skipped intra modes.

In a variant, the intra merge skip can be signaled before signaling the intra merge flag and infer the intra merge flag as true if intra merge skip is used.

In a variant, the use of intra merge skip mode for a block can be inferred or predicted from surrounding blocks. In another variant, the use of the intra merge skip mode can be inferred or predicted by prediction of the template of the block, or also named template-based prediction in the following.

Another embodiment provides for signaling by high level syntax elements the specific intra modes for which intra merge skip mode is enabled.

Another embodiment provides for a chroma intra merge skip for specific intra chroma modes, with following variants:

Joint luma-chroma tree: this variant provides a joint control of skip mode for luma and chroma, plus an independent control of skip mode for chroma when the joint luma-chroma skip mode is not used.

Separate luma-chroma tree: this variant provides an independent control of skip mode for luma and chroma.

Another embodiment provides for constructing a list of intra mode candidates for a block based on template prediction residual.

Other embodiments are provided for enabling the intra merge skip mode for specific QP ranges, or for enabling the intra merge skip mode for specific slice types, or for enabling the intra merge skip mode for specific PU/CU sizes.

An embodiment provides for inferring or predicting a flag signaling the intra merge skip mode by template matching.

An embodiment provides for inferring or predicting a flag signaling the intra merge skip mode from surrounding blocks.

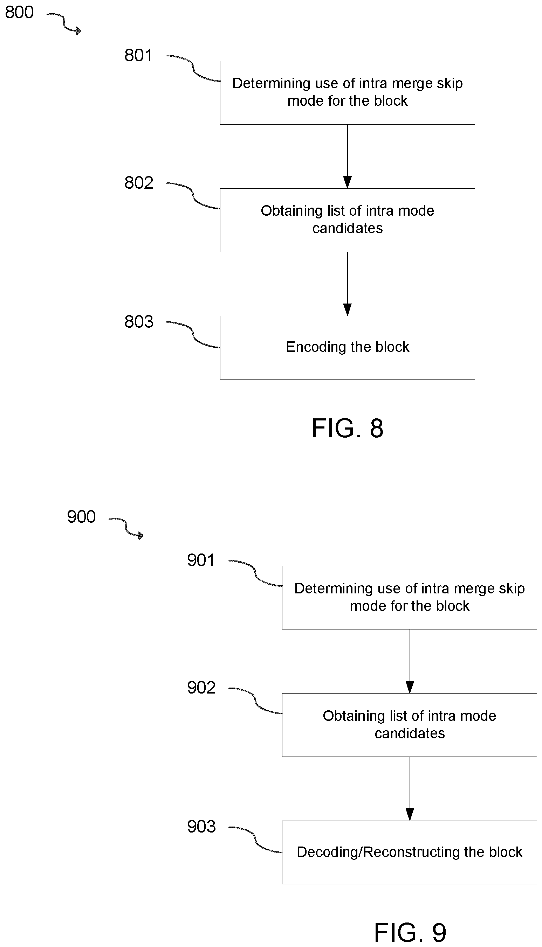

FIG. 8 illustrates an example of a method 800 for encoding a block of an image or a video according to an embodiment. For a current block of an image or a video to encode, at 801, it is determined whether or not an intra merge skip mode is used for the block. As explained above, the intra merge skip mode is a mode that indicates that no prediction residual is signaled for the block, i.e. the prediction residual is inferred to be null, and the intra mode that is used for predicting the block is selected in a list of intra mode candidates. At 802, the list of intra mode candidates is obtained based on a set of intra modes for which the intra merge skip mode is enabled. The set of intra modes are intra modes for which the use of the intra merge skip mode is allowed. In other words, a block predicted with one of these intra modes can use or not the intra merge skip mode. But a block predicted by another intra mode which is not in the set of intra modes cannot use the intra merge skip mode. In other words, the intra merge skip mode is not allowed for the block if the block is predicted by this other intra mode. The set of intra modes for which the intra merge skip mode is enabled is the group of specific intra modes mentioned above. The two wordings can be used interchangeably through the document.

For example, the set of intra modes for which the intra merge skip mode is enabled or allowed can include at least one intra mode which is distinct from an Intra Block Copy mode. At 803, if it is determined that the intra merge skip mode is used for the block, the block is encoded using an intra mode candidate selected from the list of intra mode candidates. For example, the intra mode candidate selected from the list of intra mode candidates is the intra mode candidate providing the best rate-distortion cost among the intra mode candidates of the list. A syntax element may be signaled to indicate which mode is the best intra mode candidate, for example, an index can also be encoded to signal the selected intra mode candidate.

FIG. 9 illustrates an example of a method 900 for decoding a block of an image or a video according to an embodiment. For a current block of an image or a video to decode, at 901, it is determined whether or not an intra merge skip mode is used for the block. As explained above, the intra merge skip mode is a mode that indicates that no prediction residual is signaled for the block, i.e. the prediction residual is inferred to be null, and the intra mode that is used for predicting the block is selected in a list of intra mode candidates. At 902, the list of intra mode candidates is obtained based on a set of intra modes for which the intra merge skip mode is enabled or allowed. For example, this set of intra modes can include at least one intra mode which is distinct from an Intra Block Copy mode. At 903, if the intra merge skip mode is used for the block, the block is reconstructed using an intra mode candidate selected from the list of intra mode candidates. A syntax element may be decoded to identify which mode is the intra mode among the intra mode candidates, for example, the intra mode candidate selected from the list of intra mode candidates is identified using an index decoded for the block.

The embodiments in relation with FIG. 8 and 9 can be implemented with one or more variants discussed above or below. Some of these variants can also be embodiments on their own.

Use intra merge skip mode for specific intra modes

In an embodiment, the intra merge skip mode is enabled for a set of intra modes that consists of specific intra modes from all available intra modes for the block. For example, the set of intra modes comprises at least one intra mode that is distinct from the IBC mode. In another example, the set of intra modes includes the IBC mode and at least another intra mode.

In this embodiment, when the intra merge skip mode is used for a given area, the merge mode is used, and in addition the residual in this area is inferred to be null and the prediction in this area is considered as the reconstructed signal. The given area can be a part of a slice, a CTU, a CU, a block, ...

The set of intra modes for which the intra merge skip mode is enabled corresponds to intra modes expected to produce accurate predictions, or alternatively, residual signal with small energy (small residual samples amplitude, either in spatial representation or in frequency/transform domain). For example, in addition to IBC, the set of intra modes can include one or more of the following intra modes: ITMP, MIP, CCLM, CCCM, chroma DBV, IBC GPM.

The use of the intra merge skip mode by the block can be signaled by a flag, named here intra_merge_skip_flag. This flag may be signaled at CTU, CU or PU level. The signaling of the intra_merge_skip_flag may be also controlled by a high-level syntax, at SPS, PPS or slice level by high level flags, such as for example sps_intra_merge_skip_enabled_flag, pps_intra_merge_skip_enabled_flag, slice_intra_merge_skip_enabled_flag. These high-level flags controlling whether the intra merge skip mode can be used for the blocks of the image or video.

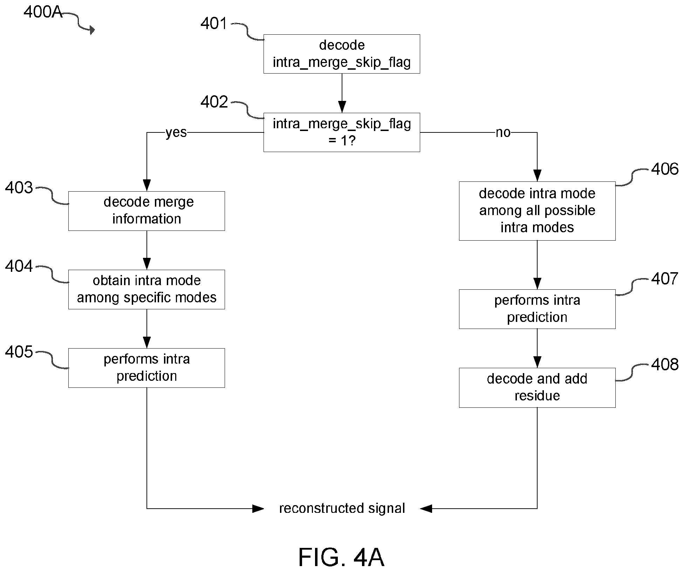

A simplified block diagram for the decoding process (400A) using the intra merge skip mode is provided in FIG. 4A. It applies for a block, for example a CU. The intra_merge_skip_flag is parsed (decoded) from the input bitstream in step 401. In step 402 it is tested whether intra_merge_skip_flag is true or not. If intra_merge_skip_flag is true (step 402), in step (403) the merge information is decoded. This may consist in decoding a merge index value indicating which information to use from a list of intra mode candidates, and possibly an indicator of the list of intra mode candidates to use when several lists are available.

In step 404, the intra mode for predicting the block is obtained among the set of intra modes for which the intra merge skip mode is enabled. Parameters related to the obtained intra mode may also be obtained (such as BV in case of IBC mode, location of template samples - top, left, top-left - in case of CCLM or CCCM mode).

The list of intra mode candidates is constructed from the set of intra modes for which intra merge skip may be used. For example, the list of intra mode candidates can be one of the merge lists mentioned above for the intra merge mode. In this variant, the list of intra mode candidates comprises the intra modes used for predicting neighboring blocks of the block but only the intra modes of the neighboring blocks that are also in the set of intra modes for which intra merge skip may be used are added to the list of intra mode candidates.

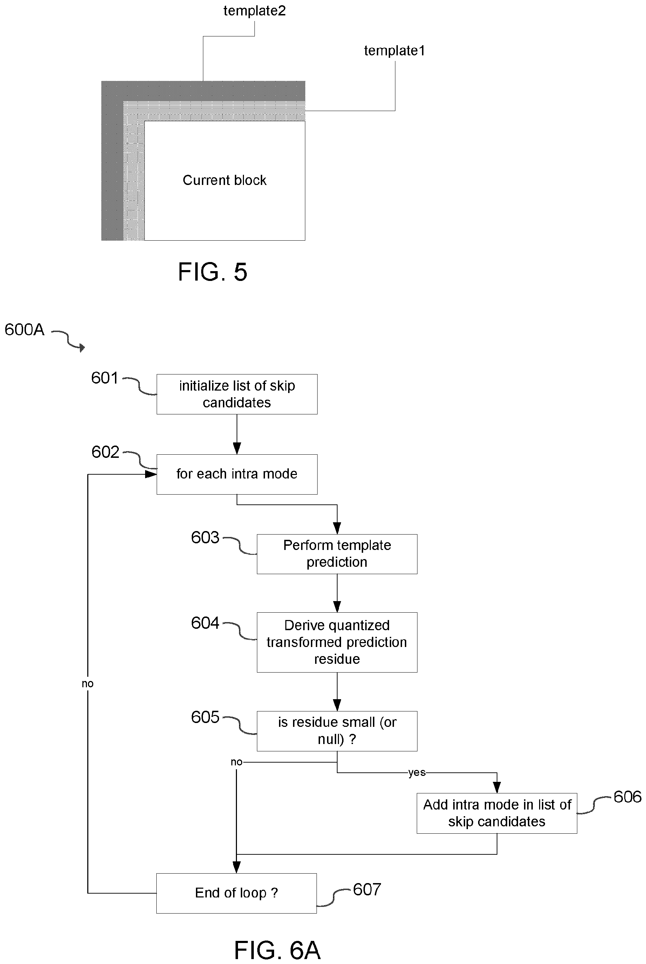

In another variant, the list of intra mode candidates can be constructed in a similar manner as the skip candidates list described below in relation with FIG. 6A.

In a further variant, as for constructing the list of intra mode candidates, only the intra mode candidates that belong to the set of intra modes for which intra merge skip may be used (specific intra modes) are considered, it may happen that the list of intra mode candidates is empty. If this is the case, in the variant, the list of intra mode candidates is filled with one or more intra mode candidates from the set of specific intra modes, for instance a default IBC candidate. Alternatively, the intra merge skip mode is set to false if the list of intra mode candidates is empty. In this alternative variant, step 404 is then performed before step 402 or before steps 401 and 402 to avoid the signaling of the intra merge skip mode.

In another variant, the decoding of the merge index value is conditioned by the size of the list of intra mode candidates. For example, if the list of intra mode candidates is empty or contains only one intra mode candidate, then no merge index value is decoded. In this variant, step 404 is performed before step 403.

At step 405, the block is predicted using the intra prediction obtained from the intra model selected in the list of intra mode candidates indicated by the merge index value. The prediction residual is inferred to be null. The reconstructed signal of the block corresponds to the prediction signal.

At step (402), if the intra_merge_skip_flag is false, the intra mode (with related information) is decoded among the set of all intra modes at step 406. Intra prediction is performed in step 407 using the decoded intra mode. At step 408, the residue is decoded and added to the intra prediction to produce the reconstructed signal.

In a variant, the intra_merge_skip_flag is only signaled for specific block sizes, for example for PUs or CUs lower than 64x64 samples.

In another variant, the intra merge skip mode is signaled first and may apply to any intra mode (not to a specific set of intra modes). In this variant, the set of intra modes for which the intra merge skip mode is enabled comprises all possible intra modes and step 404 considers all these possible intra modes for creating the list of intra mode candidates (not a restricted set).

In another variant, the intra merge skip mode is signaled after the signaling of the intra mode. When intra merge skip mode applies, parameters such as cbf for each component, TU partitioning indication, are not signaled, which potentially results in reduced bit cost.

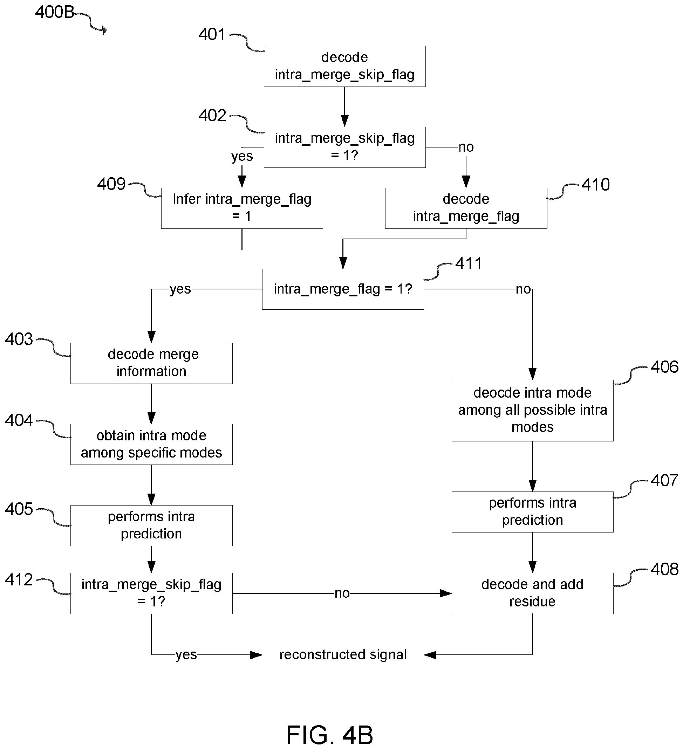

In another variant depicted in FIG. 4B, either the intra merge mode or the intra merge skip mode may be used, where the intra merge mode performs the same steps as the intra merge skip mode with additional signaling of the prediction residual. The intra merge mode is signaled using another flag called intra_merge_flag.

In a variant the intra_merge_skip_flag is signaled first. At 401, the intra_merge_skip_flag is decoded. If the intra_merge_skip_flag is false (no at 402), another flag called intra_merge_flag is signaled/decoded at 410 to indicate if intra merge mode is used or not. Otherwise (the intra_merge_skip_flag is true yes at 402), the intra_merge_flag is not signaled, at 409, its value is inferred to be true. At 411, the value of the intra_merge_flag is checked. If the intra_merge_flag is false (no at 411), then steps 406, 407 and 408 are performed as in the variant illustrated with FIG. 4A. Otherwise (yes at 411), the merge information is decoded at 403. At 404, the list of intra mode candidates is constructed as for the variant illustrated in FIG. 4A. In this variant, the list of intra mode candidates can be set to the merge list of the intra merge mode. In a further variant, the list of intra mode candidates can be restricted to the set of intra modes for which intra merge skip mode is enabled only if intra_merge_skip_flag is true, otherwise the list of intra mode candidates is not restricted.

At 405, intra prediction is done using the intra mode selected from the list of intra mode candidates. At 412, the value of intra_merge_skip_flag is checked to determine whether or not prediction residual is to be decoded and added to the prediction (at 408) to obtain the reconstructed signal.

In this variant, the signaling of the intra_merge_flag depends on the value of the intra_merge_skip_flag.

Alternatively, the intra_merge_flag can be signaled first. If the intra_merge_flag is false, then the intra_merge_skip_flag is signaled to indicate if the intra merge skip mode is used or not. Otherwise (the intra_merge_flag is true), the intra_merge_skip_flag is not signaled, its value is inferred to be false and the intra merge mode is performed.

In another variant, when the intra_merge_flag is signaled first, if the intra_merge_flag is false, neither the intra merge mode, nor the intra merge skip mode are used. If the intra_merge_flag is true, the intra_merge_skip_flag is signaled to indicate if the intra merge mode or the intra merge skip mode is used.

Selecting specific intra modes by high level syntax

In a variant of the embodiments described in the document, to define the set of intra modes for which the intra merge skip mode is enabled, high level syntax can be set to select the specific intra modes that should be included in the set. These high-level syntax elements provide for enabling or disabling the use of the intra merge skip mode, i.e. indicate whether or nor intra merge skip mode is allowed for these intra modes.

The set of specific intra modes may be variable per content (per sequence, per picture, per slice).

The specific intra modes for which the intra merge skip mode is enabled may be indicated by syntax elements in a high-level structure such as SPS, PPS or slice header. For example, at SPS level, flags such as sps_itmp_merge_skip_enabled_flag, sps_mip_merge_skip_enabled_flag, sps_ccp_merge_skip_enabled_flag, sps_cclm_merge_skip_enabled_flag, sps_cccm_merge_skip_enabled_flag, sps_ibcgpm_merge_skip_enabled_flag may be inserted to enable or disable the intra merge skip mode for ITMP, MPI, CCP, CCLM, CCCM, IBCGPM respectively.

Enabling of the intra merge skip for specific QP ranges

In another variant of the embodiments described, the intra merge skip mode can be enabled for specific QP ranges. For example, the intra merge skip mode is enabled for QP larger than 22 and disabled otherwise. Indeed, when QP is small, the probability that the residue is null is reduced. Therefore, the probability of using the intra merge skip mode is reduced.

In a variant, the QP range for which the intra merge skip mode is enabled is signaled in a high-level syntax structure, such as in the SPS, PPS, APS, or slice header. For example, two syntax elements intra_merge_skip_minQP and intra_merge_skip_maxQP are signaled in the SPS, PPS, APS, or slice header, which indicate that the intra merge skip mode is enabled for QPs between intra_merge_skip_minQP and intra_merge_skip_maxQP.

In a variant, the intra merge skip mode is enabled when the slice QP is comprised into the specific QP ranges. In another variant, the intra merge skip mode is enabled when the coding block QP is comprised into the specific QP ranges. In another variant, the intra merge skip mode is enabled based on the local QPs used in a local area comprising the block to be coded. For example, the average QP is computed over the area, and when this computed average QP is in the specific QP ranges, the use of the intra merge skip mode is enabled for the block. Other possible computed QP values are the median QP, the min QP, the max QP, computed over the area.

Enabling of the intra merge skip mode for specific slice types

In another variant of the embodiments described, the intra_merge_skip_flag is only signaled for specific slice types, for example, for intra slices. Indeed, the syntax cost overhead of signaling the intra_merge_skip_flag may be relatively more penalizing in inter slices than in intra slices, which may penalize the compression gain. In intra slices, this overhead is limited and the usage of the intra_merge_skip _flag may be more beneficial.

Alternatively, the intra_merge_skip_flag is only signaled for inter slices. This may also be beneficial because for inter slices, when using high QPs, probability of null residual may be higher, which leads to use more often the intra merge skip mode.

Infer or predict the intra merge skip flag by template-based prediction In another variant of the embodiments described, the intra_merge_skip_flag is inferred or predicted by checking the usage of this flag on template samples surrounding the current block.

As illustrated on FIG. 5, template-based prediction is a prediction of a template of the current block using samples of a farther template. For example, as illustrated on FIG. 5, for each intra mode for which the intra merge skip mode is enabled, a prediction using the intra mode is computed on a first template (template1) using the neighboring samples of template1 (template2). Then the prediction residual is computed over template1, a transform (for example Hadamard transform) is applied to this prediction residual that is finally quantized using the QP used for the current block. If the quantized transformed prediction residual is null (or with many coefficients of small amplitude), the intra mode is marked as potentially leading to null residual for the current block.

This process allows identifying a list of intra modes marked as potentially leading to null residual for the current block, thus allowing to construct a list of skip candidates. In some variants, the list of intra mode candidates obtained at 404 in FIG.4A or 4B and FIG. 8 or 9 can correspond to the list of skip candidates, wherein the list of skip candidates can be obtained as above by considering only the intra modes for which the intra merge skip mode is enabled.

This list of skip candidates can be further used to decide whether the intra merge skip mode is possible or not for the current block. For example, if the list is empty, the intra merge skip mode may be considered as not possible. In this variant, the intra_merge_skip_flag is not coded and inferred to be false. Alternatively, the size of the list can control a probability value used for arithmetic coding of the intra_merge_skip_flag.

FIG. 6A illustrates an example of a method 600A for encoding or decoding a block of an image or a video according to an embodiment. In this embodiment, a list of skip candidates is built and used for predicting the block when the intra merge skip mode is used for the block.

The list of skip candidates is initialized in step 601. The list can be empty for example, or the process may start with already pre-added intra modes. At 602, for each intra mode among the total number of possible modes, or among a specific list of intra modes, the following steps are applied. For a considered intra mode, at 603, the prediction of the template is performed using this considered intra mode. At 604, the quantized transformed residual is derived. At 605, the amplitude of the residual is checked. For example, if all coefficients are null the residue is considered as null. In another example if all coefficients are below a predefined threshold, the residue is considered as null. The predefined threshold may be for example equal to 1 or 2. In a variant, the threshold is dependent on the coefficient location. It is for example higher (2 for example) for high frequency coefficients and lower for mid frequency coefficients (for example 1) and even lower for the first frequency coefficient (for example 0).

Depending on the variants used, the amplitude of the residual that is considered at 605 can be the amplitude of the quantized transformed residual, or the amplitude of the residual before transformation and quantization or the amplitude of the transformed residual before quantization.

If the amplitude of the residual is small or null (check of step 605), the considered intra mode is added to the list of skip candidates at 606. If the amplitude of the residual is not small or null (check of step 605), the list of skip candidates is not modified. At 607, if the loop over the intra modes is not complete, the process goes back to step 602 to process the next intra mode. Otherwise, once all intra modes have been checked, the final list of skip candidates can be used as the list of intra mode candidates for predicting the current block in the intra merge skip mode.

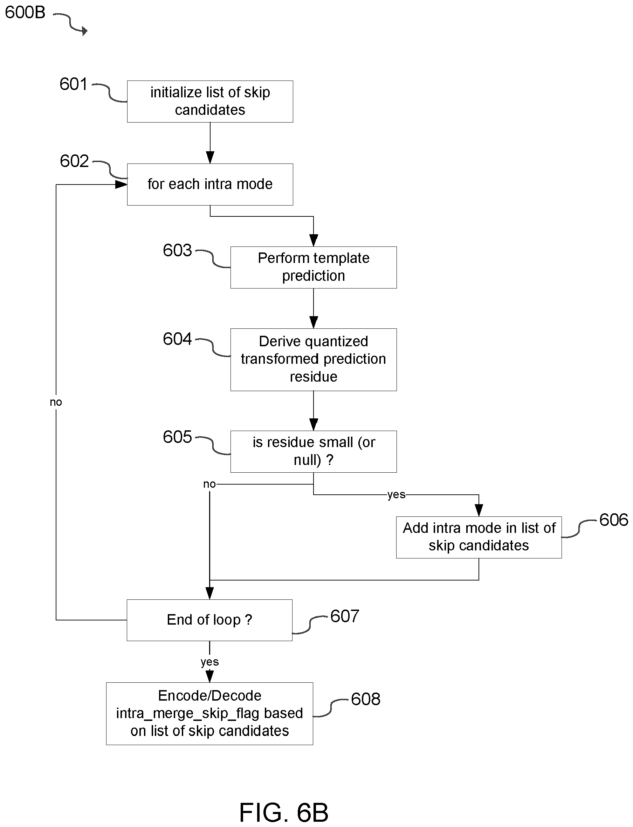

FIG. 6B illustrates a variant of FIG. 6A wherein the final list of skip candidates is used to perform the entropy coding of the intra_merge_skip_flag for the current block at 608. For example, the size of the list of skip candidates can control a probability value used for arithmetic coding of the intra_merge_skip_flag. For example, if the list size is 0, the probability value for arithmetic coding the intra_merge_skip_flag is set to 0.1, if the list size is 2 or 4, the probability value for arithmetic coding the intra_merge_skip_flag is set to 0.8.

In a variant of the embodiment of FIG. 6A and 6B, the process may be early terminated, e.g. when the list of skip candidates reaches a maximum number of intra modes to be tested with intra merge skip mode.

Infer or predict the intra merge skip flag from surrounding blocks

In another variant of the embodiments described, the intra_merge_skip_flag is inferred or predicted from the surrounding blocks of the current block. For example, considering a set of blocks located in the area neighboring the current block, the relative number of neighboring blocks using the intra merge skip mode may be counted. If this number is above a threshold, the probability value used for arithmetic coding of the intra_merge_skip_flag is increased. Another example is to count in a template area the relative number/surface of neighboring samples belonging to blocks coded in the intra merge skip mode. If this number is above a threshold, the probability value used for arithmetic coding of the intra_merge_skip_flag is increased. In a variant, a list of merge skip candidate modes for the current block is based on the analysis of the neighboring blocks. When a specific mode is used in a neighboring block, it is added to the list of modes for the current block candidate to use the merge skip mode.

Intra merge skip mode for chroma, interaction with separate luma/chroma tree

In another variant of the embodiments described, an intra merge skip mode is used for chroma blocks or CUs. It is applied for specific intra chroma modes such as CCLM, CCCM, chroma

DBV.

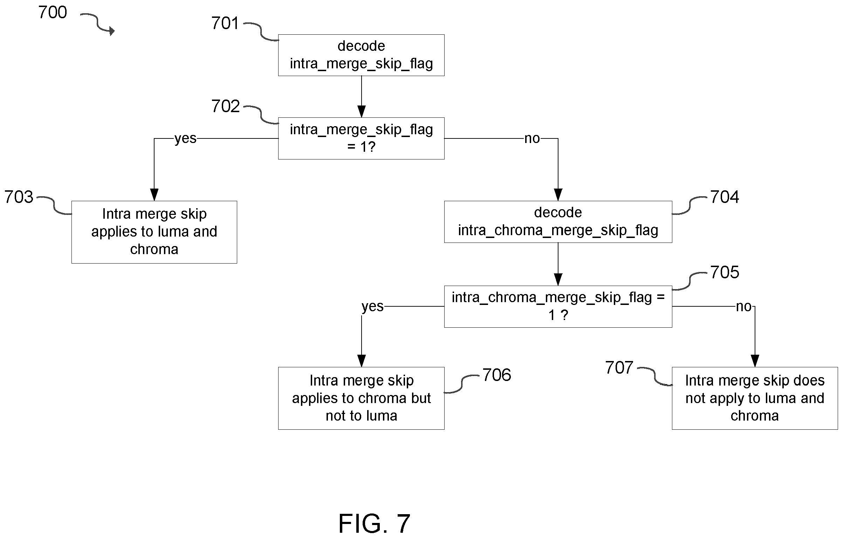

In a variant, in case of joint luma-chroma tree, a flag intra_merge_skip_flag is used jointly for the luma and chroma components. When the intra_merge_skip_flag is false, a flag intra_chroma_merge_skip_flag is used for the chroma components. When the intra_merge_skip_flag is true, the intra_chroma_merge_skip_flag is set to true for the chroma components. FIG. 7 illustrates an example of a method 700 for decoding a block of an image or a video according to this embodiment. The flag intra_merge_skip_flag is decoded in step 701. If the intra_merge_skip_flag is true (step 702), the intra merge skip mode is applied to luma and chroma blocks (703). If the intra_merge_skip_flag is false (step 702), the intra_chroma_merge_skip_flag is decoded in step 704. If the intra_chroma_merge_skip_flag is true (step 705), the intra merge skip mode is applied to chroma blocks but not to luma block (706). If the intra_chroma_merge_skip_flag is false (step 705), the intra merge skip mode is not applied to luma and chroma blocks (707).

In a variant, the set of specific intra modes for which intra merge skip mode is enabled/allowed may be different for luma and for chroma. One set of specific intra modes can be built for luma component, and one set of specific intra modes can be built for chroma components.

In case of separate luma / chroma trees, the intra chroma merge skip mode may be controlled separately from luma CUs, for example by a flag named intra_chroma_merge_skip_flag signaled per chroma CU. In addition, a flag intra_luma_merge_skip_flag may be specified to control the usage of the luma intra merge skip mode for the luma component.

In a variant, the intra_luma_merge_skip_flag is only signaled for specific luma block sizes, for example for CUs lower than 64x64 chroma samples. In a variant, the intra_chroma_merge_skip_flag is only signaled for specific chroma block sizes, for example for CUs lower than 32x32 chroma samples.

Encoder side

A process for using the new intra merge skip mode at the encoder is as follows. For a given block to encode, all the N intra modes are evaluated, m=1..N, for example based on the evaluation of a rate-distortion cost C(m), for example computed as:

$$C(m) = D(m) + \lambda.R(m)$$

where D(m) is the distortion resulting from using mode m (for example sum of square errors between the original samples of the block and the reconstructed samples of the block using mode m), R(m) is the coding cost in bits when mode m is used, $\lambda$ is a pre-defined parameter that controls the balance between the distortion and the coding cost.

The best mode m is selected as the one leading to the minimum value C(m). If the residual using this best mode is null, and the best mode is in the skip candidate list (and implicitly in the merge list and among the set of specific intra modes for which the intra merge skip mode is enabled), then the flag intra_merge_skip_flag is set to true. Otherwise, the flag intra_merge_skip_flag is set to false.

In a variant, for each intra mode supporting the intra merge skip mode, the costs are computed as:

$$C'(m) = D'(m) + \lambda.R'(m)$$

where D'(m) is the distortion of using the prediction of a mode m (supporting the intra merge skip mode) as the reconstruction, and R'(m) the coding cost in bits when mode m is used, and no residuals are signaled. In other words, cost C'(m) of a mode m is a cost obtained when the residuals, even if they exist (e.g. are non-zero), are considered to be all zero. In such way, the intra merge skip mode is deliberately set up and tested. The costs of all C'(m) can be compared to the C(m) costs and if the lowest found cost is C'(m), the intra_merge_skip_flag is set to true. In another variant, the cost C'(m) of a mode m supporting the intra merge skip mode is only computed when the rate of coding the residual is under a threshold. In another variant, the cost C'(m) of a mode m supporting the intra merge skip mode is only computed when the absolute sum of amplitudes of the residuals is under a threshold. In another variant, the cost C'(m) of a mode m supporting the intra merge skip mode is computed based on the analysis of the transformed and/or quantized coefficients. For example, by analyzing the number of the non-zero and zero quantized coefficients it can be decided to calculate C'(m). If a ratio of number of non-zero and zero coefficients is smaller than a threshold, C'(m) is calculated and tested. The same can be done based on the position of the last non-zero coefficient in the transformed (e.g. after core transform) or quantized block (e.g. after quantization). If the quantized coefficient is close to the top left corner of the block, C'(m) may be calculated.

Combination of previous variants to decide whether to calculate C'(m) or not may be used (at least one variant may be used).

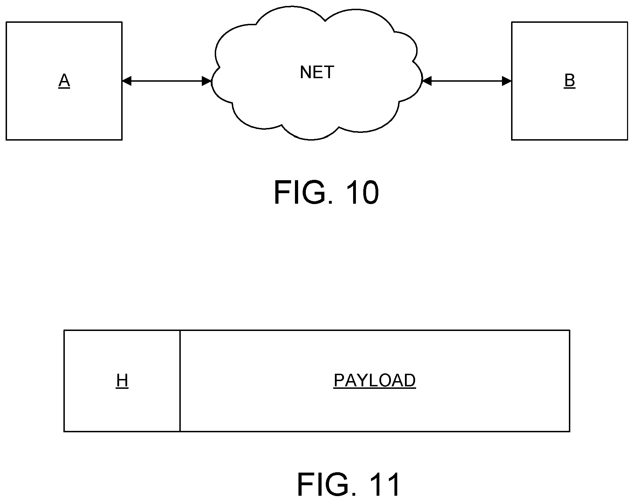

In an embodiment, illustrated in FIG. 10, in a transmission context between two remote devices A and B over a communication network NET, the device A comprises a processor in relation with memory RAM and ROM which are configured to implement a method for encoding an image or a video according to any one of the embodiments described herein and the device B comprises a processor in relation with memory RAM and ROM which are configured to implement a method for decoding an image or a video according to any one of the embodiments described herein. In accordance with an example, the network is a broadcast network, adapted to broadcast/transmit a coded video from device A to decoding devices including the device B.

FIG. 11 shows an example of the syntax of a signal transmitted over a packet-based transmission protocol. Each transmitted packet P comprises a header H and a payload PAYLOAD. In some embodiments, the payload PAYLOAD may comprise data representative of an image or a video encoded according to any one of the embodiments described above. The payload can also comprise any signaling as described above. For example, the signal comprises one or more of the following syntax elements: a flag indicating for a block of the image or video whether or not an intra merge skip mode is used for predicting the block, an index value indicating an intra mode in a list of intra mode candidates to be used for predicting the block, to one or more syntax elements at SPS, PPS or slice header that provide for enabling or disabling the use of the intra merge skip mode for a given intra mode, one or more syntax elements indicating QP ranges for which the use of intra merge skip mode is enabled, a flag indicating for a chroma component of the block whether or not the intra merge skip mode is used for the chroma component, a flag indicating for a luma component of the block whether or not the intra merge skip mode is used for the luma component.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, entropy decoding a sequence of binary symbols to reconstruct image or video data.

As further examples, in one embodiment "decoding" refers only to entropy decoding, in another embodiment "decoding" refers only to differential decoding, and in another embodiment "decoding" refers to a combination of entropy decoding and differential decoding, and in another embodiment "decoding" refers to the whole reconstructing picture process including entropy decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, determining re-sampling filter coefficients, re-sampling a decoded picture.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, are descriptive terms. As such, they do not preclude the use of other syntax element names.

This disclosure has described various pieces of information, such as for example syntax, which can be transmitted or stored, for example. This information can be packaged or arranged in a variety of manners, including for example manners common in video standards such as putting the information into an SPS, a PPS, a NAL unit, a header (for example, a NAL unit header, picture header or a slice header), or an SEI message. Other manners are also available, including for example manners common for system level or application level standards such as putting the information into one or more of the following:

a. SDP (session description protocol), a format for describing multimedia communication sessions for the purposes of session announcement and session invitation, for example as described in RFCs and used in conjunction with RTP (Real-time Transport Protocol) transmission.
b. DASH MPD (Media Presentation Description) Descriptors, for example as used in DASH and transmitted over HTTP, a Descriptor is associated to a Representation or collection of Representations to provide additional characteristic to the content Representation.
c. RTP header extensions, for example as used during RTP streaming.
d. ISO Base Media File Format, for example as used in OMAF and using boxes which are object-oriented building blocks defined by a unique type identifier and length also known as 'atoms' in some specifications.
e. HLS (HTTP live Streaming) manifest transmitted over HTTP. A manifest can be associated, for example, to a version or collection of versions of a content to provide characteristics of the version or collection of versions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Some embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

A number of embodiments has been described above. Features of these embodiments can be provided alone or in any combination, across various claim categories and types.

## Claims

1. A method, comprising:

   determining, for a block of a video, whether or not an intra merge skip mode is used for the block, the intra merge skip mode indicating that residual prediction of the block is inferred to be null and an intra mode for predicting the block is selected in a list of intra mode candidates,
   obtaining the list of intra mode candidates based on a set of intra modes for which the intra merge skip mode is enabled, the set of intra modes comprising at least one intra mode distinct from an Intra Block Copy mode,
   if the intra merge skip mode is used for the block, reconstructing the block using a selected intra mode candidate in the list of intra mode candidates.

2. An apparatus comprising one or more processors operable to:

   determine, for a block of a video, whether or not an intra merge skip mode is used for the block, the intra merge skip mode indicating that residual prediction of the block is inferred to be null and an intra mode for predicting the block is selected in a list of intra mode candidates,
   obtain the list of intra mode candidates based on a set of intra modes for which the intra merge skip mode is enabled, the set of intra modes comprising at least one intra mode distinct from an Intra Block Copy mode,
   if the intra merge skip mode is used for the block, reconstruct the block using a selected intra mode candidate in the list of intra mode candidates.

3. The method of claim 1 or the apparatus of claim 2, wherein the list of intra mode candidates is obtained by adding, in the list, at least one intra mode from the set of intra modes for which intra merge skip mode is enabled, the at least one intra mode being used for predicting neighboring blocks of the block.

4. The method of any one of claims 1 or 3, or the apparatus of any one of claims 2 or 3, wherein the list of intra mode candidates is obtained by adding, in the list, at least one intra mode selected in the set of intra modes for which intra merge skip mode is enabled based on a residual obtained for predicting a template of the block using the at least one intra mode.

5. The method of any one of claims 1, or 3-4 or the apparatus of any one of claims 2-4, wherein intra merge skip mode is enabled for all intra modes available for predicting the block.

6. The method of any one of claims 1, or 3-5 or the apparatus of any one of claims 2-5, wherein intra merge skip mode is enabled for a given intra mode based on a flag decoded for the given intra mode at a sequence level, or picture level or slice level.

7. The method of any one of claims 1, or 3-6 or the apparatus of any one of claims 2-6, wherein the set of intra modes for which intra merge skip mode is enabled comprises one or more intra modes among Intra Block Copy mode, Intra Template Matching Prediction mode, Matrix-based Intra Prediction, Cross-Component Linear Model mode, Convolutional Cross-Component Model mode, chroma Direct Block Vector mode, Intra Block Copy using Geometric Partitioning Mode.

8. The method of any one of claims 1, or 3-7 or the apparatus of any one of claims 2-7, wherein determining whether or not the intra merge skip mode is used for the block is based on a flag decoded for the block.

9. The method or the apparatus of claim 8, wherein the flag is decoded for the block for specific block sizes or for specific QP ranges or for specific slide types.

10. The method of any one of claims 1, or 3-9 or the apparatus of any one of claims 2-9, wherein the selected intra mode candidate is selected in the list of intra mode candidates using an index decoded for the block.

11. The method of any one of claims 1, or 3-10, further comprising or the apparatus of any one of claims 2-10, wherein the one or more processors are further configured for : responsive to the determination that the intra merge skip mode is not used for the block, determining for the block whether or not an intra merge mode is used for the block, wherein in the intra merge mode, an intra mode for the block is determined from the list of intra mode candidates and residual prediction of the block is decoded.

12. The method of any one of claims 1, or 3-10 or the apparatus of any one of claims 2-10, wherein determining whether or not the intra merge skip mode is used for the block is responsive to a determination that an intra merge mode is not used for the block.

13. The method of any one of claims 1, or 3-10 or the apparatus of any one of claims 2-10, wherein determining whether or not the intra merge skip mode is used for the block is responsive to a determination that an intra merge mode is used for the block.

14. The method of any one of claims 1, or 3-10 or the apparatus of any one of claims 2-10, wherein responsive to a determination that the intra merge mode is not used for the block, the intra merge skip mode is not used for the block.

15. The method of any one of claims 1, or 3-14, further comprising, or the apparatus of any one of claims 2-14, wherein the one or more processors are further configured to: determining whether or not the intra merge skip mode is used for chroma components of the block is responsive to a determination that the intra merge skip mode is not used for luma component of the block.

16. The method of any one of claims 1, or 3-14, or the apparatus of any one of claims 2-14, wherein responsive to a determination that the intra merge skip mode is used for luma component of the block, the intra merge skip mode is used for chroma components of the block.

17. The method of any one of claims 1, or 3-16, or the apparatus of any one of claims 2-16, wherein responsive to determination that the list of intra mode candidates is empty, the intra merge skip mode is not used for the block.

18. The method of any one of claims 1, or 3-16, or the apparatus of any one of claims 2-16, wherein responsive to determination that the list of intra mode candidates is empty, a default intra mode candidate is added to the list of intra mode candidates.

19. The method or the apparatus of claim 8, wherein entropy decoding the flag is based on a size of the list of intra mode candidates.

**20.** The method or the apparatus of claim 8, wherein entropy decoding the flag is based on a number of neighboring blocks of the block that use the intra merge skip mode.

FIG. 1A

FIG. 1B

FIG. 1C

FIG. 2

FIG. 3

FIG. 4A

400B

401 — decode
intra_merge_skip_flag

402 — intra_merge_skip_flag
= 1?

yes → 409 — Infer intra_merge_flag
= 1

no → 410 — decode
intra_merge_flag

411 — intra_merge_flag = 1?

yes →

403 — decode merge
information

404 — obtain intra mode
among specific modes

405 — performs intra
prediction

412 — intra_merge_skip_flag
= 1?

no → 406 — deocde intra mode
among all possible intra
modes

407 — performs intra
prediction

no → 408 — decode and add
residue

yes → reconstructed signal ←

FIG. 4B

template2

template1

Current block

## FIG. 5

600A

601 — initialize list of skip candidates

602 — for each intra mode

603 — Perform template prediction

604 — Derive quantized transformed prediction residue

605 — is residue small (or null) ?

no

yes

Add intra mode in list of skip candidates — 606

no

End of loop ? — 607

## FIG. 6A

600B

601 — initialize list of skip candidates

602 — for each intra mode

603 — Perform template prediction

604 — Derive quantized transformed prediction residue

605 — is residue small (or null) ?

no

yes

Add intra mode in list of skip candidates — 606

End of loop ? — 607

no

yes

Encode/Decode intra_merge_skip_flag based on list of skip candidates — 608

FIG. 6B

FIG. 7

800

801 — Determining use of intra merge skip mode for the block

802 — Obtaining list of intra mode candidates

803 — Encoding the block

FIG. 8

900

901 — Determining use of intra merge skip mode for the block

902 — Obtaining list of intra mode candidates

903 — Decoding/Reconstructing the block

FIG. 9

A ←→ NET ←→ B

FIG. 10

| H | PAYLOAD |
|---|---------|

FIG. 11

Europäisches
Patentamt
European
Patent Office
Office européen
des brevets

## EUROPEAN SEARCH REPORT

**Application Number**

EP 24 30 5973

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 547 868 B2 (SAMSUNG ELECTRONICS CO LTD [KR]) 28 January 2020 (2020-01-28) | 1-18 | INV. H04N19/11 |
| Y | * abstract * * figures 1, 2 * * column 1 - column 2 * * column 4 - column 19 * ----- | 19,20 | H04N19/157 H04N19/17 H04N19/593 H04N19/70 |
| Y | US 2020/186792 A1 (ZHAO XIN [US] ET AL) 11 June 2020 (2020-06-11) | 19,20 | |
| A | * paragraph [0010] - paragraph [0022] * * paragraph [0074] - paragraph [0092] * * paragraph [0138] - paragraph [0145] * ----- | 1-18 | |
| A | WO 2024/002846 A1 (INTERDIGITAL CE PATENT HOLDINGS SAS [FR]) 4 January 2024 (2024-01-04) * page 14 * ----- | 1-20 | |

**TECHNICAL FIELDS SEARCHED (IPC)**

H04N

The present search report has been drawn up for all claims

| Place of search | Date of completion of the search | Examiner |
|---|---|---|
| Munich | 5 December 2024 | Morbee, Marleen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5973

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2024

| Patent document cited in search report | | Publication date | Patent family member(s) | | Publication date |
|---|---|---|---|---|---|
| US 10547868 | B2 | 28-01-2020 | CN | 106878752 A | 20-06-2017 |
| | | | KR | 20170069917 A | 21-06-2017 |
| | | | US | 2018324460 A1 | 08-11-2018 |
| US 2020186792 | A1 | 11-06-2020 | CN | 113424546 A | 21-09-2021 |
| | | | CN | 118368424 A | 19-07-2024 |
| | | | EP | 3891996 A1 | 13-10-2021 |
| | | | JP | 7132352 B2 | 06-09-2022 |
| | | | JP | 2021520150 A | 12-08-2021 |
| | | | JP | 2022162101 A | 21-10-2022 |
| | | | KR | 20210090270 A | 19-07-2021 |
| | | | KR | 20240119193 A | 06-08-2024 |
| | | | US | 2020186792 A1 | 11-06-2020 |
| | | | US | 2021329228 A1 | 21-10-2021 |
| | | | US | 2023068825 A1 | 02-03-2023 |
| | | | US | 2024372995 A1 | 07-11-2024 |
| | | | WO | 2020117583 A1 | 11-06-2020 |
| WO 2024002846 | A1 | 04-01-2024 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Versatile Video Coding, Standard ITU-T H.266. *ISO/IEC 23090-3*, 2020
- Algorithm description of Enhanced Compression Model 12 (ECM 12). *JVET-AG2025, 33rdMeeting, Teleconference*, 17 January 2024
- **Y.-J. CHANG** ; **V. SEREGIN** ; **M. KARCZEWICZ,**. Non-EE2: Intra merge mode. *JVET-AH0211*, April 2024
- SERIES H: AUDIOVISUAL AND MULTIMEDIA SYSTEMS Infrastructure of audiovisual services - Coding of moving video, Versatile video coding. *ITU-T H.266*, 2022